# EUROPÄISCHE PATENTSCHRIFT

(11) **EP 1 072 348 B1**
(45) Veröffentlichungstag und Bekanntmachung des Hinweises auf die Patenterteilung: **05.10.2005**
(21) Anmeldenummer: 00112452.8
(22) Anmeldetag: 10.06.2000
(51) Int. Cl.: B23G 1/32, B23G 5/18

(54) **Vorrichtung zum Rotationsgewindefräsen und Gewindefräser für diese Vorrichtung**
Device for thread milling and milling cutter for this device
Dispositif de fraisage de filetage et fraise à utiliser dans ce dispositif

(30) Priorität: 02.07.1999 DE 19930617
(43) Veröffentlichungstag der Anmeldung: 31.01.2001
(73) Patentinhaber: EMUGE-Werk Richard Glimpel GmbH & Co.KG Fabrik für Präzisionswerkzeuge, 91207 Lauf (DE)
(72) Erfinder: Meyer, Ernst, 91207 Lauf a.d. Pegnitz (DE); Glimpel, Helmut, Dipl.-Ing., 91207 Lauf a.d. P. (DE)
(74) Vertreter: Böhme, Volker

(56) Entgegenhaltungen:
- DE-A- 19 735 340
- DE-C- 694 531
- GB-A- 155 690
- GB-A- 255 935
- US-A- 1 795 093
- US-A- 5 733 078

## Beschreibung

Die Erfindung betrifft eine Vorrichtung zum Rotationsgewindefräsen, bei der eine sich mit einer Drehzahl drehende Werkstückspindel ein Werkstück, an dem das Gewinde zu fräsen ist, trägt, bei der eine sich mit einer Drehzahl drehende Fräserspindel einen Gewindefräser, der zum Fräsen des Gewindes einen Arbeitsbereich bildet, trägt, bei der die Werkstückspindel und die Fräserspindel mit ihren Drehachsen zueinander parallel sind und sich zu/bei dem Gewindefräsen gegeneinander axial bewegen, bei der der Gewindefräser im Arbeitsbereich Zähne aufweist, deren Zahnprofil im Hinblick auf das Gewindeprofil des zu fräsenden Gewindes ausgelegt ist, und bei der die axiale Gegeneinander-Bewegung von Werkstückspindel und Fräserspindel bei einem Drehzahlverhältnis ≠ 1 erfolgt.

Es wird auch ein Gewindefräser für diese Vorrichtung beschrieben, der einen Arbeitsbereich bildet, der in Reihen angeordnete Zähne aufweist, deren Zahnprofil im Hinblick auf das Gewindeprofil eines angegebenen zu fräsenden Gewindes ausgelegt ist.

Bei einer bekannten (CH 666 429 A = DE 3 402 743 A1) Vorrichtung der eingangs genannten Art werden die Werkstückspindel und die Fräserspindel zu/bei dem Gewindefräsen gegeneinander nur axial bewegt, wobei der Gewindefräser unter Fräsen des Gewindes allmählich in das Werkstück axial hineinwandert bzw. eindringt. Damit das Gewinde mit der gewünschten Länge hergestellt werden kann, ist der Arbeitsbereich kürzer als das gewünschte Gewinde und ist die axiale Bewegung zumindest ebenso lang wie und in der Regel länger als das Gewinde. Bei der axialen Bewegung wird das Gewinde gefräst und die axiale Bewegung dauert ihrer Abmessungslänge wegen zeitlich relativ lang.

Aus der DE 197 35 340 A1 ist ein Verfahren zum Gewindefräsen bekannt, bei dem das Werkstück mit einer vorgegebenen Werkstück-Drehzahl rotiert. Ein mit einer vorgegebenen Fräser-Drehzahl rotierender Fräser bewegt sich mit einem vorgegebenen, gleichmäßigen Vorschub auf der Längsachse des Werkstücks. Soll ein konisches Innengewinde gefertigt werden, bewegt sich der Fräser zusätzlich gleichzeitig auch in radialer Richtung. Die Werkstückspindel und die Fräserspindel zum Fräsen des Gewindes werden jedoch nicht an dem Werkstück gegeneinander radial bewegt, auch ist die zum Gewindefräsen vorgesehene axiale Gegeneinander-Bewegung nicht kürzer als das Gewinde. Die zeitliche Dauer der dem Gewindefräsen dienenden axialen Gegeneinander-Bewegung von Werkstückspindel und Fräserspindel ist daher auch beim Verfahren gemäß DE 197 35 340 A1 relativ hoch.

Aufgabe der Erfindung ist es nun, eine Vorrichtung der eingangs genannten Art zu schaffen, bei der die zeitliche Dauer der dem Gewindefräsen dienenden axialen Gegeneinander-Bewegung von Werkstückspindel und Fräserspindel verkürzt ist.

Die erfindungsgemäße Vorrichtung ist, diese Aufgabe lösend, dadurch gekennzeichnet, dass die Werkstückspindel und die Fräserspindel zu/bei dem Gewindefräsen gegeneinander radial bewegt werden und die zu/bei dem Gewindefräsen vorgesehene axiale Gegeneinander-Bewegung kürzer als das Gewinde ist, dass der Gewindefräser im Arbeitsbereich Zähne aufweist, deren Zahnprofil im Hinblick auf das Gewindeprofil des zu fräsenden Gewindes ausgelegt ist und dass die Zähne des Gewindefräser-Arbeitsbereiches in Reihen axial hintereinander angeordnet sind.

Zweckmäßig ist es, wenn zunächst die radiale Bewegung bei einem Drehzahlverhältnis gleich 1 und davon gesondert dann die axiale Bewegung erfolgt.

Bei der erfindungsgemäßen Vorrichtung erfolgt das Gewindefräsen im wesentlichen durch die radiale Verstellung. Die vollständige Länge des zu fräsenden Gewindes wird durch die radiale Zustellung erzeugt, was das Gewindefräsen insgesamt beschleunigt. Wenn man z.B. eine bestimmte Ausführungsform der bekannten (CH 666 429 A) Vorrichtung mit einer entsprechenden Ausführungsform der erfindungsgemäßen Vorrichtung vergleicht, dann erfolgt die Erzeugung eines Gewindes bei der Erfindung 2 bis 3 mal so schnell wie beim Bekannten. Der Arbeitsbereich des Gewindefräsers hat zumindest die Länge des zu fräsenden Gewindes. Die axiale Gegeneinander-Bewegung wird in Verbindung mit dem Drehzahlverhältnis ≠ 1 angewendet, um das Gewinde exakt rund zu fräsen bzw. das Gewinde zu glätten. Die radiale Bewegung ist abhängig von der Drehzahl des Werkstückes. Die Erfindung liegt in der Anwendung der dem Gewindefräsen dienenden radialen Zustellung des Gewindefräsers bei sich drehendem Werkstück. Die anfallenden Späne sind von vorteilhafter Gestalt und die Belastung der Gewindefräszähne ist günstig. Bei rein radialer Zustellung ist die Belastung der Zähne gleichmäßiger.

Alternativ ist erfolgt die radiale Bewegung und die axiale Bewegung einander überlagernd gleichzeitig. Dadurch wird der gesamte Fräsvorgang verkürzt, da eine Umstellung der Vorrichtung nicht erforderlich ist.

Bei der erfindungsgemäßen Vorrichtung ist eine Schrägstellung des Gewindefräsers relativ zum Werkstück nicht gegeben. Dies ermöglicht die Verwendung größerer Längen des Arbeitsbereichs des Gewindefräsers und größerer Längen des zu fräsenden Gewindes. Es kann bis zu einer Tiefenbegrenzung Gewinde gefräst werden. Da das Werkstück rotiert, entfällt eine Umlaufbewegung des Gewindefräsers. Die Zähne sind in den Gängen um die Fräserachse herum mit Steigung angeordnet. Die erfindungsgemäße Vorrichtung lässt sich für das Fräsen von Außengewinde und für das Fräsen von Innengewinde gestalten. Das zu 1 ungleiche Drehzahlverhältnis beträgt z.B. 0,8 : 1 - 1,2 : 1, wobei es gleichgültig ist, welche der beiden Spindeln mit 1 angesetzt wird. Das zu 1 ungleiche Drehzahlverhältnis bleibt während des Fräsens des Gewindes konstant. Die Drehzahlen werden werkstückabhängig eingestellt und die Schnittgeschwindigkeiten sind wie bei der bekannten Vorrichtung. Dort wo der Gewindefräser in das Werkstück eingreift, bewegen sich der Gewindefräser und das Werkstück gegenläufig.

Besonders zweckmäßig und vorteilhaft ist es sodann, wenn das zu 1 ungleiche Drehzahlverhältnis 0,95 : 1 - 1,05 : 1 ist. Dies ergibt eine feinere bzw. glattere Oberfläche des gefrästen Gewindes.

Besonders zweckmäßig und vorteilhaft ist es weiterhin, wenn der Gewindefräser-Arbeitsbereich an zumindest einem Ende mit einem Anschnitt versehen ist. Dieser Gewindefräser lässt sich nicht nur auf der erfindungsgemäßen Vorrichtung einsetzen, sondern auch bei der bekannten (CH 666 429 A) Vorrichtung.

Besonders zweckmäßig und vorteilhaft ist es noch, wenn die axiale Gegeneinander-Bewegung mindestens so groß ist wie die Steigung des zu erzeugenden Gewindes dividiert durch die Anzahl der um den Umfang des Arbeitsbereiches angeordneten Zähne. In der Regel ist die axiale Bewegung gleich dieser Strecke. Die axiale Bewegung ist dann auf das nötige Mindestmaß beschränkt.

Der Gewindefräser ist vorzugsweise dadurch gekennzeichnet, dass das Zahnprofil der Zähne des Arbeitsbereiches verschieden ist von dem Gewindeprofil des angegebenen Gewindes, indem es im Hinblick auf das angegebene Gewinde korrigiert (kompensiert) ist, und dass die Zähne unter Steigung angeordnet sind. Die Art und das Maß der Abweichung des Zahnprofils von dem zu erzeugenden Gewindeprofil ergeben sich aufgrund der Parallelität von Werkstückachse und Fräserachse durch die Steigung des zu fräsenden Gewindes.

Zur Erklärung der Profilkorrektur bzw. der Profilkompensation wird folgendes bemerkt: Der Fräser bzw. die das Gewinde erzeugenden Zähne des Fräsers dreht sich in einer Ebene, die nicht identisch mit der Ebene ist, die an jeder beliebigen infinitesimal kleinen Stelle parallel zum zu erzeugenden Werkstückprofil ist. Deshalb erfolgt auch keine identische Abbildung der im Normalschnitt (rechtwinkelig zur Steigung) betrachteten Fräser-Profil-Geometrie auf die Werkstück-Geometrie (im Normalschnitt). Vielmehr wird die Profil-Geometrie des Fräsers durch die Richtungsdifferenz der Wirkebenen in einer Projektion auf das Werkstück abgebildet. Um die gewollte Geometrie zu erhalten, muss die Fräser-Geometrie durch eine der Projektion in der Größe identische und in der Richtung entgegengesetzte Projektion von der Fräser-Profil-Geometrie abgeleitet werden. Somit erhalten Fräser und Werkstück jeweils im Normalschnitt betrachtet eine voneinander unterschiedliche Profil-Geometrie. Dabei wird die Fräser-Profil-Geometrie von der zu erzeugenden Werkstück-Profil-Geometrie und der sich aus der Lage der Wirkebenen ergebenden Abbildung ermittelt. Diesen Vorgang bezeichnet man als Profil-Kompensation.

Der erfindungsgemäße Gewindefräser ist definiert durch die eigene Gestalt und zusätzliche Angaben, die am Gewindefräser selbst und/oder an einem Schriftstück, wie einer Verpackung des Gewindefräsers, einem Beipackzettel oder einem Prospekt, angegeben sind. Diese zusätzlichen Angaben umfassen das Gewindeprofil des zu fräsenden Gewindes, im Hinblick auf welches das Zahnprofil korrigiert ist, und den Hinweis, dass sich der Gewindefräser an einer Vorrichtung zum Gewindefräsen, die nur vier Achsen (also keine zusätzliche Kippachse) aufweist, verwenden lässt. Für den Gewindefräser gilt also vorzugsweise, dass er für eine Vorrichtung zum Rotationsgewindefräsen bestimmt ist, die mit zwei zueinander parallelen Drehachsen und zwei Zustellungen ausgerüstet ist.

In der Zeichnung sind bevorzugte Ausführungsformen der Erfindung dargestellt und zeigt
- Fig. 1: schematisch eine Seitenansicht mit Aufbruch einer Vorrichtung zum Rotationsgewindefräsen,
- Fig. 2: ein Werkstück und einen Gewindefräser für die Vorrichtung gemäß Fig. 1, in einer ersten Stellung vor dem Gewindefräsen,
- Fig. 3: das Werkstück und den Gewindefräser gemäß Fig. 2, in einer zweiten Stellung nach dem Gewindefräsen,
- Fig. 4: das Werkstück und den Gewindefräser gemäß Fig. 2, in der ersten Stellung vor dem Gewindefräsen,
- Fig. 5: das Werkstück und den Gewindefräser gemäß Fig. 4, in einer Zwischenstellung bei nur teilweise gefrästen Gewinde,
- Fig. 6: das Werkstück und den Gewindefräser gemäß Fig. 4, in der zweiten Stellung nach dem Gewindefräsen,
- Fig. 7: im Schnitt ein zweites Werkstück und einen zweiten Gewindefräser für die Vorrichtung gemäß Fig. 1, in einer zweiten Stellung nach dem Gewindefräsen,
- Fig. 8: eine Seitenansicht der Darstellung in Fig. 7,
- Fig. 9: eine Draufsicht eines dritten Werkstücks und eines dritten Gewindefräsers für die Vorrichtung gemäß Fig. 1, in einer zweiten Stellung nach dem Gewindefräsen,
- Fig. 10: eine Seitenansicht der Darstellung in Fig. 9 und
- Fig. 11: ein Zahnprofil und ein zugehöriges Gewindeprofil.

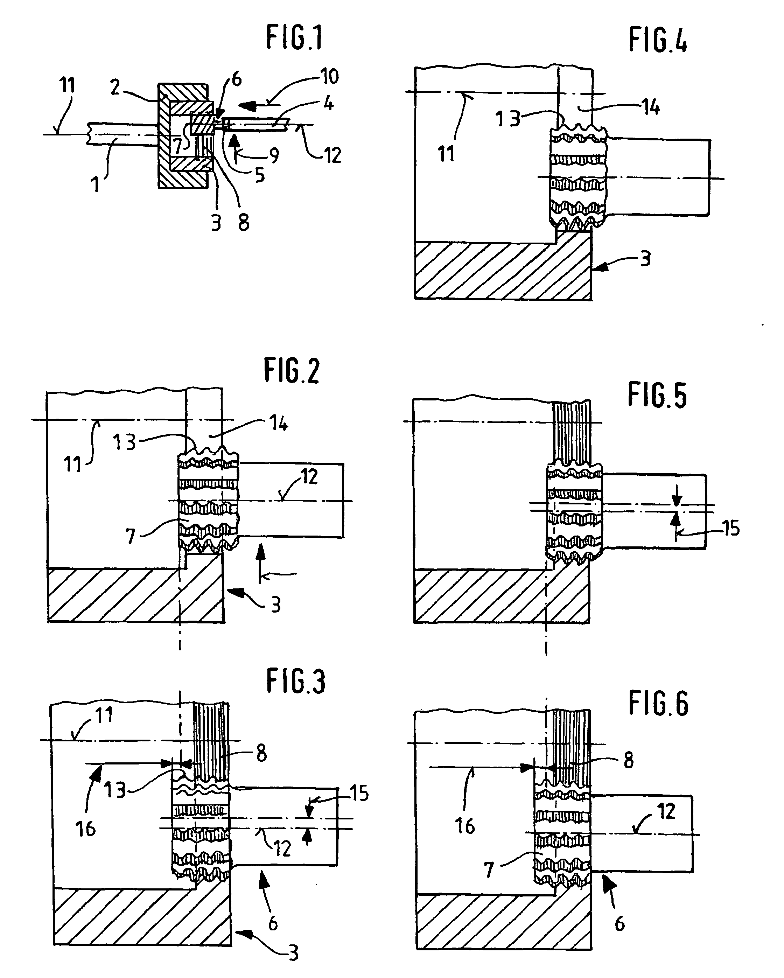

Die Vorrichtung gemäß Fig. 1 weist an einer Werkstückspindel 1 eine Spanneinrichtung 2 auf, die ein Werkstück 3 hält. Es ist auch eine Fräserspindel 4 vorgesehen, die eine Spanneinrichtung 5 aufweist, die einen Gewindefräser 6 hält, der einen Arbeitsbereich 7 bildet. Mit dem Arbeitsbereich 7 wird an dem Werkstück 3 ein Gewinde 8 gefräst, wobei die Fräserspindel 4 eine radiale Bewegung 9 und eine axiale Bewegung 10 macht. Die Achse 11 der Werkstückspindel 1 und damit des Werkstücks 3 und die Achse 12 der Fräserspindel 4 und damit des Arbeitsbereiches 7 sind zueinander parallel. Der Arbeitsbereich 7 ist mit Zähnen 13 besetzt.

In der ersten Stellung gemäß Fig. 2 ist der Gewindefräser 6 relativ zum Werkstück 3 bzw. zu einem Streifen 14, in dem das Gewinde gefräst werden soll, positioniert. Der Gewindefräser 6 wird dann gleichzeitig um ein Maß 15 radial zugestellt und um ein Maß 16 axial zugestellt und gelangt so unmittelbar in die Stellung gemäß Fig. 3, in der in dem Streifen 14 das Gewinde 8 gefräst ist. Bei der Ausführungsform gemäß Fig. 4 - 6 wird der Gewindefräser 6 zunächst nur um das Maß 15 radial zugestellt und in die Zwischenstellung gemäß Fig. 5 gebracht. Sodann wird der Gewindefräser um das Maß 16 axial zugestellt und in die zweite Stellung gemäß Fig. 6 gebracht.

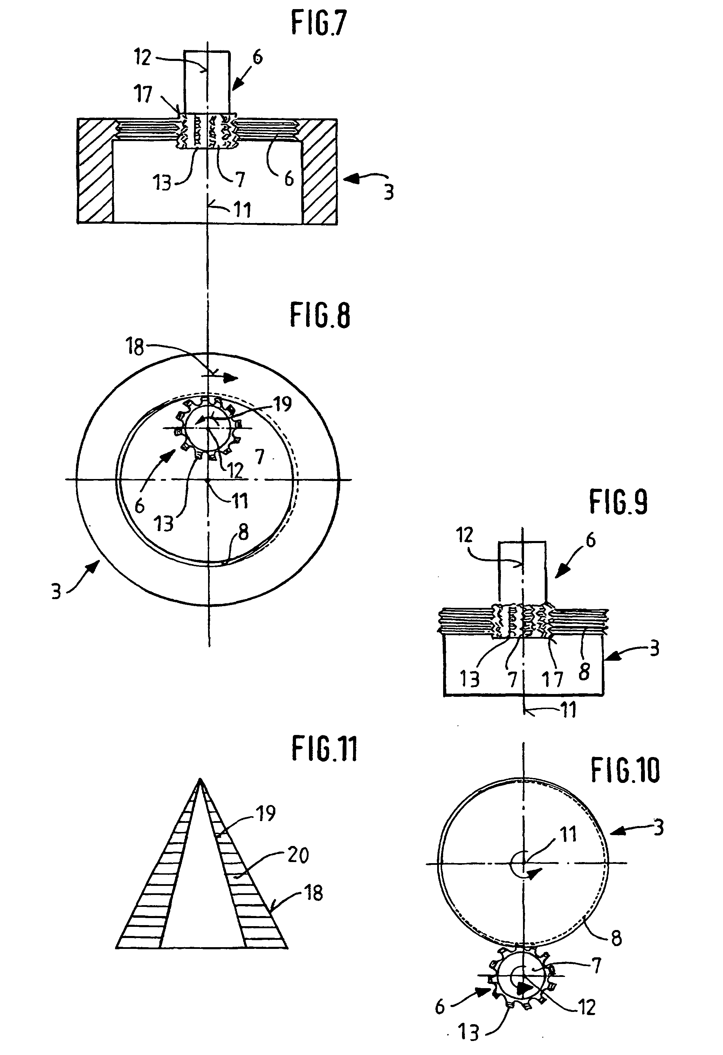

Fig. 7 und 8 verdeutlichen nochmals das Werkstück 3 und den Gewindefräser 6 gemäß Fig. 2 und 3. Der Arbeitsbereich 7 des Gewindefräsers 6 ist an beiden Enden mit einem Anschnitt 17 versehen. Gemäß Fig. 8 rotiert das Werkstück 3 im Uhrzeigersinn 18 und der Gewindefräser 6 im Gegenuhrzeigersinn 19. Der Gewindefräser und das Werkstück bewegen sich dort, wo sie zusammenwirken, also gegenläufig. Während Fig. 1 - 8 die Verhältnisse für das Fräsen eines Innengewindes zeigen, zeigen Fig. 9 und 10 die Verhältnisse für das Fräsen eines Außengewindes.

Gemäß Fig. 11 wird zum Fräsen eines Gewindeprofils 18 des Gewindes 8 ein Zahnprofil 19 der Zähne 13 vorgesehen, dessen Verschiedenheit vom Gewindeprofil durch schraffierte Flächen 20 verdeutlicht ist.

## Patentansprüche

1. Verfahren zum Rotationsgewindefräsen
a) mit einer Vorrichtung,
a1) bei der eine sich mit einer Drehzahl drehende Werkstückspindel (1) ein Werkstück (3), an dem das Gewinde (8) zu fräsen ist, trägt,
a2) bei der eine sich mit einer Drehzahl drehende Fräserspindel (4) einen Gewindefräser (6), der zum Fräsen des Gewindes (8) einen Arbeitsbereich (7) bildet, trägt und
a3) bei der die Werkstückspindel (1) und die Fräserspindel (4) mit ihren Drehachsen (11, 12) zueinander parallel sind,
b) bei dem die Werkstückspindel (1) und die Fräserspindel (4) zum Fräsen des Gewindes (8) an dem Werkstück (3) gegeneinander axial bewegt (10) werden, und
c) bei dem die axiale Gegeneinander-Bewegung (10) von Werkstückspindel (1) und Fräserspindel (4) bei einem Drehzahlverhältnis ≠ 1 erfolgt,
**dadurch gekennzeichnet**,
d) dass die Werkstückspindel (1) und die Fräserspindel (4) zum Fräsen des Gewindes (8) an dem Werkstück (3) gegeneinander radial bewegt (9) werden,
e) dass die zum Gewindefräsen vorgesehene axiale Gegeneinander-Bewegung (10) kürzer als das Gewinde (8) ist,
f) dass der Gewindefräser (6) im Arbeitsbereich (7) Zähne (13) aufweist, deren Zahnprofil im Hinblick auf das Gewindeprofil des zu fräsenden Gewindes (8) ausgelegt ist und
g) dass die Zähne (13) des Gewindefräser-Arbeitsbereiches (7) in Reihen axial hintereinander angeordnet sind.

2. Verfahren nach Anspruch 1,
**dadurch gekennzeichnet,**
**dass** zunächst die radiale Bewegung (9) bei einem Drehzahlverhältnis gleich 1 und davon gesondert dann die axiale Bewegung (10) erfolgt.

3. Verfahren nach Anspruch 1,
**dadurch gekennzeichnet,**
**dass** die radiale Bewegung (9) und die axiale Bewegung (10) einander überlagernd gleichzeitig erfolgen.

4. Verfahren nach einem der vorhergehenden Ansprüche,
**dadurch gekennzeichnet,**
**dass** das zu 1 ungleiche Drehzahlverhältnis 0,8 : 1 bis 1,2 : 1 ist.

5. Verfahren nach einem der vorhergehenden Ansprüche,
**dadurch gekennzeichnet,**
**dass** das zu 1 ungleiche Drehzahlverhältnis 0,95 : 1 bis 1,05 : 1 ist.

6. Verfahren nach einem der vorhergehenden Ansprüche,
**dadurch gekennzeichnet,**
**dass** der Gewindefräser-Arbeitsbereich (7) an zumindest einem Ende mit einem Anschnitt (17) versehen ist.

7. Verfahren nach einem der vorhergehenden Ansprüche,
**dadurch gekennzeichnet,**
**dass** die axiale Gegeneinander-Bewegung (10) mindestens so groß ist wie die Steigung des zu erzeugenden Gewindes (8) dividiert durch die Anzahl der um einen Umfang des Gewindefräser-Arbeitsbereiches (7) angeordneten Zähne (13).

8. Verfahren nach einem der vorhergehenden Ansprüche,
**dadurch gekennzeichnet,**
**dass** das Zahnprofil (19) der Zähne (13) des Gewindefräser-Arbeitsbereichs (7) verschieden (20) ist von dem Gewindeprofil (18) des zu fräsenden Gewindes (8), indem es im Hinblick auf das zu fräsende Gewinde (8) korrigiert und/oder kompensiert ist.

9. Verfahren nach einem der vorhergehenden Ansprüche,
**dadurch gekennzeichnet,**
**dass** die Zähne (13) des Gewindefräser-Arbeitsbereichs (7) unter Steigung angeordnet sind.

## Claims

1. Process for rotational thread milling
a) having a device,
a1) in which a workpiece spindle (1) rotating at one speed supports a workpiece (3), on which the thread (8) is to be milled,
a2) in which a milling spindle (4) rotating at one speed supports a thread miller (6), which forms a working region (7) to mill the thread (8) and
a3) in which the axes of rotation (11, 12) of the workpiece spindle (1) and the milling spindle (4) are parallel to one another,
b) in which the workpiece spindle (1) and the milling spindle (4) are moved (10) axially with respect to one another on the workpiece (3) to mill the thread (8), and
c) in which the axial counter movement (10) of workpiece spindle (1) and milling spindle (4) takes place at a speed ratio ≠ 1, **characterised in that**
d) the workpiece spindle (1) and the milling spindle (4) are moved (9) radially with respect to one another on the workpiece (3) to mill the thread (8),
e) **in that** the axial counter movement (10) provided for thread milling is shorter than the thread (8),
f) **in that** the thread miller (6) has teeth (13) in the working region (7), the tooth profile of which is designed with respect to the thread profile of the thread (8) to be milled and
g) **in that** the teeth (13) of the thread miller working region (7) are arranged in rows axially one behind another.

2. Process according to claim 1, **characterised in that** first of all the radial movement (9) takes place at a speed ratio equal to 1 and separately therefrom then the axial movement (10).

3. Process according to claim 1, **characterised in that** the radial movement (9) and the axial movement (10) take place simultaneously superimposing one another.

4. Process according to one of the preceding claims, **characterised in that** the speed ratio not equal to 1 is 0.8 : 1 to 1.2 : 1.

5. Process according to one of the preceding claims, **characterised in that** the speed ratio not equal to 1 is 0.95 : 1 to 1.05 : 1.

6. Process according to one of the preceding claims, **characterised in that** the thread miller working region (7) is provided with a notch (17) at least at one end.

7. Process according to one of the preceding claims, **characterised in that** the axial counter movement (10) is at least as large as the pitch of the thread (8) to be produced divided by the number of teeth (13) arranged around the periphery of the thread miller working region (7).

8. Process according to one of the preceding claims, **characterised in that** the tooth profile (19) of the teeth (13) of the thread miller working region (7) is different (20) from the thread profile (18) of the thread (8) to be milled, **in that** it is corrected and/or compensated with respect to the thread (8) to be milled.

9. Process according to one of the preceding claims, **characterised in that** the teeth (13) of the thread miller working region (7) are arranged below pitch.

## Revendications

1. Procédé de fraisage de filetage
a) avec un dispositif,
a1) dans lequel une broche d'outil (1) tournant à un nombre de tours porte une pièce (3), à laquelle le filetage (8) doit être fraisé,
a2) dans lequel une broche porte-fraise (4) tournant à un nombre de tours porte une fraise de filetage (6) qui, pour le fraisage du filetage (8), forme une zone de travail (7) et
a3) dans lequel la broche de pièce (1) et la broche porte-fraise (4) sont parallèles l'une à l'autre avec leurs axes de rotation (11,12),
b) dans lequel la broche de pièce (1) et la broche porte-fraise (4), pour le fraisage du filetage (8) à la pièce (3), sont déplacées l'une contre l'autre axialement (10), et
c) dans lequel le mouvement axial l'une contre l'autre (10) de la broche de pièce (1) et de la broche porte-fraise (4) a lieu à un rapport de nombre de tours ≠ 1,
**caractérisé**,
d) en ce que la broche de pièce (1) et le broche porte-fraise (4), pour le fraisage du filetage (8) à la pièce (3), sont déplacées l'une contre l'autre radialement (9),
e) en ce que le mouvement axial l'une contre l'autre (10) prévu pour le fraisage du filetage est plus court que le filetage (8),
f) en ce que la fraise de filetage (6) présente dans la zone de travail (7) des dents (13) dont le profil de dent est conçu en fonction du profil du filetage à fraiser et
g) en ce que les dents (13) de la zone de travail de la fraise de filetage (7) sont disposés en rangées axialement les unes derrière les autres.

2. Procédé selon la revendication 1,
**caractérisé en ce que**
d'abord a lieu le mouvement radial (9) à un rapport de nombre de tours égal à 1 et ensuite, séparément, le mouvement axial (10).

3. Procédé selon la revendication 1,
**caractérisé en ce que**
le mouvement radial (9) et le mouvement axial (10) ont lieu simultanément en étant superposés.

4. Procédé selon l'une des revendications précédentes,
**caractérisé en ce que**
le rapport de nombre de tours non égal à 1 est de 0,8:1 jusqu'à 1,2:1.

5. Procédé selon l'une des revendications précédentes,
**caractérisé en ce que**
le rapport de nombre de tours non égal à 1 est de 0,95: 1 à 1,05: 1.

6. Procédé selon l'une des revendications précédentes,
**caractérisé en ce que**
la zone de travail de fraise de filetage (7) présente à au moins une extrémité une face d'attaque (17).

7. Procédé selon l'une des revendications précédentes, **caractérisé en ce que** le mouvement axial l'une contre l'autre (10) est au moins aussi grand que le pas du filetage (8) à réaliser divisé par le nombre de dents (13) disposées autour d'une périphérie de la zone de travail de fraise de filetage (7).

8. Procédé selon l'une des revendications précédentes, **caractérisé en ce que** le profil de dent (19) des dents (13) de la zone de travail de fraise de filetage (7) est différent (20) du profil de filetage (18) du filetage (8) à fraiser **en ce qu'**il est corrigé et/ou compensé en ce qui concerne le filetage à fraiser (8).

9. Procédé selon l'une des revendications précédentes, **caractérisé en ce que** les dents (13) de la zone de travail de fraise de filetage (7) sont disposées selon un pas.
